(19) Europäisches Patentamt
European Patent Office
Office européen des brevets

(11) **EP 3 098 752 A1**

(12) **EUROPEAN PATENT APPLICATION**

(43) Date of publication:
**30.11.2016 Bulletin 2016/48**

(51) Int Cl.:
***G06K 9/00*** *(2006.01)*

(21) Application number: **15305834.2**

(22) Date of filing: **29.05.2015**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**MA**

(71) Applicant: **Thomson Licensing**
**92130 Issy-les-Moulineaux (FR)**

(72) Inventors:
• **Burgos, Xavier**
**35576 Cesson Sevigne Cedex (FR)**
• **Bordei, Cristina**
**35576 Cesson Sevigne Cedex (FR)**
• **Le Clerc, Francois**
**35576 Cesson Sevigne Cedex (FR)**

(74) Representative: **Huchet, Anne**
**TECHNICOLOR**
**1-5, rue Jeanne d'Arc**
**92130 Issy-les-Moulineaux (FR)**

(54) **METHOD AND DEVICE FOR GENERATING AN IMAGE REPRESENTATIVE OF A CLUSTER OF IMAGES**

(57)    A method of generating a first image, the method comprising, for each second image of a set (10) of second images representative of an object, obtaining an information representative of a shape of the object; clustering the second images into a plurality of clusters according to the information; for each cluster of the plurality of clusters, generating the first image using the information associated with each second image of the cluster, the first image being representative of the cluster.

A corresponding device is also recited.

**Fig 1**

Printed by Jouve, 75001 PARIS (FR)

**Description**

**1. Technical field**

The present disclosure relates to the domain of image processing, especially to the generation of a first image representative of a cluster of second images representing an object. The present disclosure also relates to the reconstruction of an image of a face, for example the reconstruction of the image of a face at least partially occluded by a head-mounted display, especially when used for immersive experiences in gaming, virtual reality, movie watching or video conferences for example.

**2. Background art**

Head-mounted displays (HMD) have undergone major design improvements in the last years. They are now lighter and cheaper and have higher screen resolution and lower latency, which makes them much more comfortable to use. As a result, HMD are now at a point where they will slowly start to affect the way we consume digital content in our everyday lives. The possibility of adapting the content being watched to the user's head movements provides a perfect framework for immersive experiences in gaming, virtual reality, movie watching or video conferences.

One of the issues of wearing an HMD to this day is that they are very invasive, and hide the wearer's face. In some cases, this is not an issue since the wearer of the HMD is isolated in a purely individualistic experience. However, the recent success of HMD's suggests that they will soon play a part in social interactions. One example can be collaborative 3D immersive games where two individuals play together and can still talk and see each other's faces. Another example is video-conferencing, where switching from traditional screens to HMD can bring the possibility of viewing the other person (and his surroundings) in 3D as if he was really there. In both cases, not seeing the other person's face clearly damages the quality of the social interaction.

Reconstructing the face of a user, partially occluded or not, requires texture information on the part(s) of the face to be reconstructed. Obtaining such texture information is a heavy process that leaves room for improvement.

**3. Summary**

The purpose of the present disclosure is to overcome at least one of these disadvantages.

The present disclosure relates to a method of generating a first image, the method comprising:

- for each second image of a set of second images representative of an object, obtaining an information representative of a shape of the object;
- clustering the second images into a plurality of clusters according to the information;
- for each cluster of the plurality of clusters, generating the first image using the information associated with each second image of the cluster, the first image being representative of the cluster.

According to a particular characteristic, the generating comprises, for each cluster of the plurality of clusters:

- partitioning each second image of the cluster into a plurality of parts according to the information;
- generating for each part of the plurality of parts a texture information;
- generating the first image from the texture information of each part.

Advantageously, the method further comprises obtaining for each cluster of the plurality of clusters an information representative of a cluster center.

According to a specific characteristic, the information representative of a shape of the object in a second image is obtained from landmarks associated with the object of the second image.

Advantageously, the method further comprises, for at least a current image comprising a representation of said object:

- obtaining an information representative of a shape of the object in the at least a current image;
- selecting a cluster among the plurality of clusters by comparing the information representative of a shape of the object in the at least a current image with the information representative of cluster center;
- replacing at least a part of the object of the at least a current image with a corresponding at least a part of the object represented in the first image representative of the selected cluster.

According to another characteristic, the method further comprises associating the first image with a 3D model of the object, the replacing using said 3D model.

Advantageously, the object is a face of a user wearing a head mounted display, the at least a replaced part of the object corresponding to a part of the face occluded by the head mounted display, the at least a replaced part being determined from information representative of dimensions of the head mounted display and from information representative of a location of the head mounted display obtained from at least one inertial sensor of the head mounted display.

The present disclosure also relates to a device configured to generate a first image, the device comprising at least one processor configured to:

- obtain, for each second image of a set of second images representative of an object, an information representative of a shape of the object;
- cluster the second images into a plurality of clusters according to the information;
- generate, for each cluster of the plurality of clusters, the first image using the information associated with each second image of the cluster, the first image being representative of the cluster.

According to a particular characteristic, the at least one processor is further configured to, for each cluster of the plurality of clusters:

- partition each second image of the cluster into a plurality of parts according to the information;
- generate for each part of the plurality of parts a texture information;
- generate the first image from the texture information of each part.

Advantageously, the at least one processor is further configured to obtain for each cluster of the plurality of clusters an information representative of a cluster center.

According to a specific characteristic, the information representative of a shape of the object in a second image is obtained from landmarks associated with the object of the second image.

Advantageously, the at least one processor is further configured to, for at least a current image comprising a representation of said object:

- obtain an information representative of a shape of the object in the at least a current image;
- select a cluster among the plurality of clusters by comparing the information representative of a shape of the object in the at least a current image with the information representative of cluster center;
- replace at least a part of the object of the at least a current image with a corresponding at least a part of the object represented in the first image representative of the selected cluster.

According to another characteristic, the at least one processor is further configured to associate the first image with a 3D model of the object, the replacing using said 3D model.

The present disclosure also relates to a computer program product comprising instructions of program code for executing, by at least one processor, the abovementioned method of generating a first image, when the program is executed on a computer.

The present disclosure also relates to a (non-transitory) processor readable medium having stored therein instructions for causing a processor to perform at least the abovementioned method of generating a first image.

## 4. List of figures

The present disclosure will be better understood, and other specific features and advantages will emerge upon reading the following description, the description making reference to the annexed drawings wherein:

- figure 1 shows the classification of second images representing an object and the generation of first images representatives of clusters of second images, according to a particular exemplary embodiment of the present principles;
- figure 2 shows the generation of a 3D model of the object represented in the second images of figure 1, according to a particular exemplary embodiment of the present principles;
- figure 3 shows landmarks associated with the object represented in the second images of figure 1, according to a particular exemplary embodiment of the present principles;
- figure 4 shows the reconstruction of at least a part of an object of a current image using first image(s) of figure 1, according to a particular exemplary embodiment of the present principles;
- figure 5 shows the object of figure 4 before and after reconstruction, according to a particular exemplary embodiment of the present principles;
- figure 6 shows a method of reconstructing at least a part of the object of the current image of figure 4, according to a particular exemplary embodiment of the present principles;

- figure 7 shows a method of generating the first image(s) of figure 1, according to a particular exemplary embodiment of the present principles;

- figure 8 diagrammatically shows the structure of a device configured for implementing the method of reconstructing of figure 6 and/or the method of generating first image(s) of figure 7, according to a particular exemplary embodiment of the present principles.

## 5. Detailed description of embodiments

The subject matter is now described with reference to the drawings, wherein like reference numerals are used to refer to like elements throughout. In the following description, for purposes of explanation, numerous specific details are set forth in order to provide a thorough understanding of the subject matter. It can be evident, however, that subject matter embodiments can be practiced without these specific details.

The present principles will be described in reference to a particular embodiment of a method of generating first image(s), each representative of a cluster comprising a plurality of second images and each second image representing an object. The method advantageously comprises obtaining an information representative of the shape of the object for each second image, the information corresponding for example to the coordinates of interest points of the object, called landmarks. The set of second images is clustered into a plurality of clusters according to the shape information and a first image is generated for each cluster. A first image representing a determined cluster is obtained by using the shape information associated with each second image of this determined cluster.

The present principles will also be described in reference to a particular embodiment of a method of reconstructing at least a part of an object represented in a current image using the aforementioned first image(s).

The present principles will be described with regard to an object corresponding to a face of a user, according to a non-limiting example. Naturally, the present principles are not limited to an object corresponding to a face but extend to any object that can be represented in an image or in a video, for example any object that may be deformed (at least partly) or not, or that may have different forms, even similar, such as animals, houses, cars, clouds, etc.

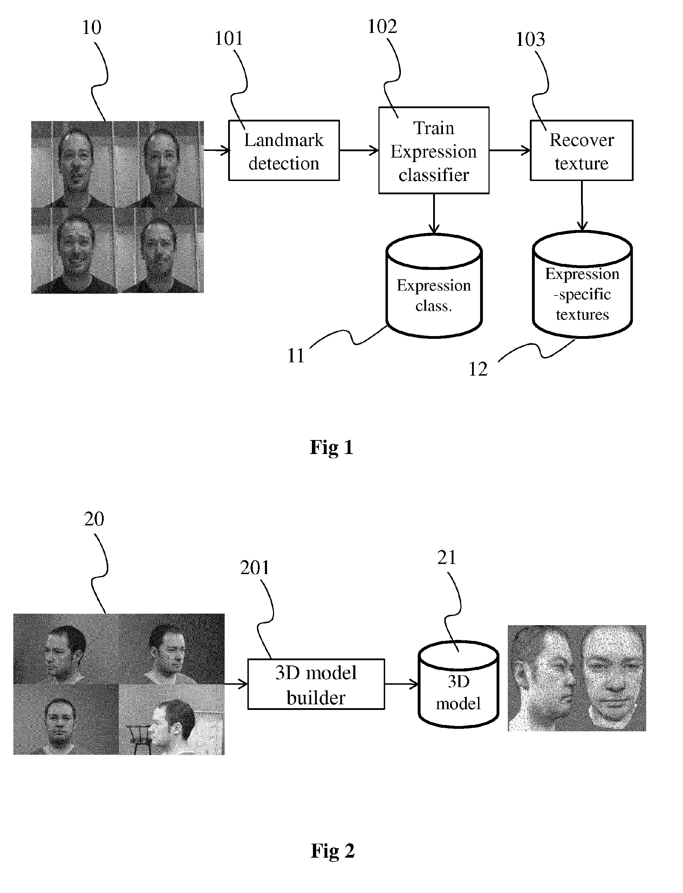

**Figure 1** shows the classification of images of a face of a user, called second images, based on shape information associated with each second image, according to a particular and non-limiting embodiment of the present principles. A plurality of clusters, each comprising at least one second image, is obtained and a first image representative of the content of each cluster is generated by using the shape information.

A set of second images 10 of the face of the user is obtained, for example with an acquisition device such as a HD camera or a webcam, or from a remote server, of from the internet. The set comprises advantageously any number of second images, for example 20, 50 , 100, 1000, 10000 or up to hundreds of thousands of images or more. According to this non-limiting example, the second images represent the face of the user having a collection of different expressions, for example the face of the user smiling and/or interrogative and/or worried and/or surprised, etc. The second images may have different sizes with different resolutions. According to a variant, the second images have all the same size and/or all the same resolution. The face of the user is advantageously represented according to a same head pose in each second image. According to a variant, the face of the user takes different poses in the second images or is taken from different camera viewpoints other than frontal.

In a step 101, an automatic face landmarking method is applied to the set of second images 10 to estimate the shape of the face in each second image, i.e. the shape of the eyes and/or the shape of the mouth and/or the shape of the nose and/or the shape and/or the chin and/or the eyebrow(s) and/or the contour of the face.

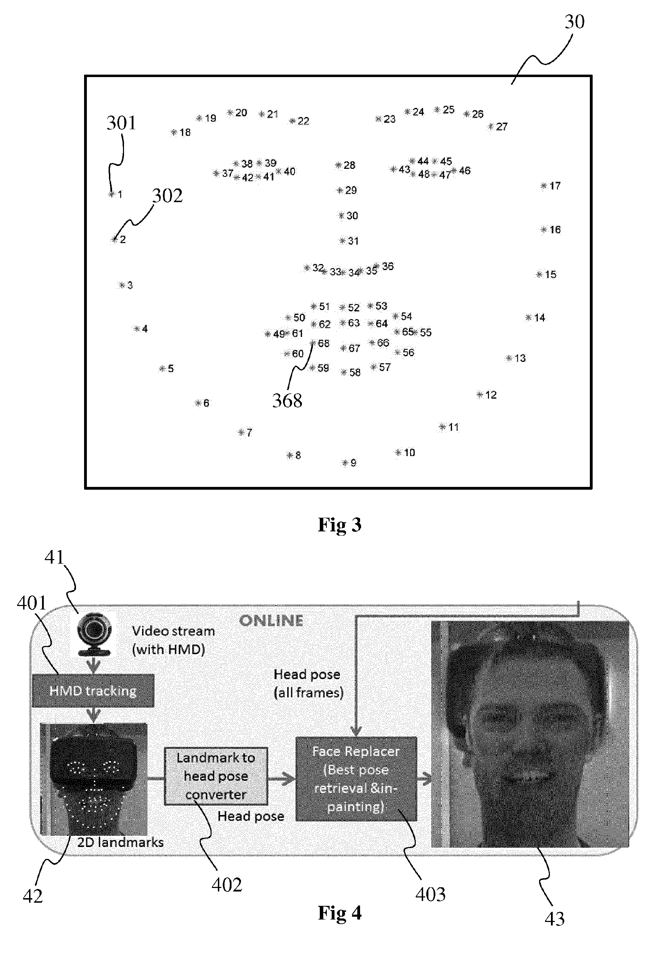

Landmarks, representing the shape of the face, obtained by the face landmarking method are illustrated on **figure 3,** according to a particular and non-limiting embodiment of the present principles. Figure 3 shows an image 30 comprising 68 landmarks of the face represented in the second image. An image 30 is advantageously associated with each second image of the set of second images. The landmarks 301, 302 to 368 correspond to key points or interesting spots of a face, such as eye corners, nose tips, mouth corners and face contour, etc. Each landmark is advantageously identified with an ID, for example an integer. The IDs in the example of figure 3 are 1, 2, 3 ... 68. Coordinates (x,y) are advantageously associated with each landmark corresponding to the position of the landmark in the image 30, which has the size of the second image that it is associated with. In the case of a 3D image, the coordinates of the landmark are (x,y,z). Naturally, the interesting spots are highly dependent from the type of object represented in the second images and are different from an object to another one. Naturally, the number of landmarks is not limited to 68 but extends to any number L, L being an integer, for example 50, 138 or 150.

The face shape of the face represented in a given second image may be defined as a shape vector S:

$$S = \langle \mathbf{X}, \mathbf{Y} \rangle$$

with $\mathbf{X,Y} \in \mathbb{R}^L$, wherein L corresponds to the number of Landmarks. As the skilled artisan will understand, the shape of a face of a determined second image may be represented with two vectors, a first vector **X** collecting all x coordinates of the L landmarks and a second vector **Y** collecting all y coordinates of the L landmarks. The face landmarking method is for example one of the following: Active Shape Models (ASM, for example described by T. Cootes and C.J. Taylor. Active shape models. In Proceedings of the British Machine Vision Conference, 1992*)*, Active Appearance Model (AAM, for example described by T. Cootes, G. Edwards, and C. Taylor. Active appearance models. Transactions in Pattern Analysis and Machine Intelligence, 23(6):681(685, 2001*)*, Deformable Part Models (DPM, for example described by P. Felzenszwalb, R. Girshick, D. McAllester, and D. Ramanan. Object detection with discriminatively trained part based models. Transactions in Pattern Analysis and Machine Intelligence, 32(9):1627{1645, 2010*)*, Cascaded Pose Regression (CPR, for example described by X.P. Burgos-Artizzu, P. Perona, and P. Dollar. Robust face landmark estimation under occlusion. In proceedings of the International Conference in Computer Vision, 2013*)*, Cascaded Neural Networks (CNN, for example described by J. Zhang, S. Shan, M. Kan, X. Chen. Coarse-to-fine auto-encoder networks for real-time face alignment. In proceedings of the European Conference in Computer Vision, 2014).

If N (integer) is the number of second images of the set 10, the result of the face landmarking process applied on the N second images is a set of N training shapes S = $<S_1, S_2, ..., S_N>$.

According to an advantageous variant, all training shapes S are normalized to remove size variations occurring from a second image to another one. The normalization is obtained as follow, for each shape $S_1$ to $S_N$:

$$S' = < X', Y' >, where\ X' = \frac{X - \min(X)}{\max(X)}, Y' = \frac{Y - \min(Y)}{\max(Y)} \qquad \text{Equation 1}$$

with S' corresponding to the normalized shape S; min(**X**) and min(**Y**) the minimal x and y coordinates among all coordinates **X** and **Y** of the landmarks of the shape S; max(**X**) and max(**Y**) the maximal x and y coordinates among all coordinates **X** and **Y** of the landmarks of the shape S.

In a step 102, the normalized training shapes S' are clustered into a plurality of clusters, for example into K clusters, K being greater than or equal to 1. The clustering of the training shapes uses for example the K-means algorithm, with K being the number of expressions of the face to be discovered, i.e. the number of clusters at the end of the clustering/classification process. K-means clustering aims at partitioning N second images into K clusters in which each shape S' belongs to the cluster with the nearest mean. The mean of the cluster is also called the "cluster center". K is an input parameter of the algorithm. More precisely, given a set of N shapes S' where each shape is a 2-dimensional real vector, K-means clustering aims at partitioning the N shapes S' into K clusters C = $<C_1, C_2, ..., C_K>$ so as to minimize the within-cluster sum of squares:

$$argmin\ \sum_{k=1}^{K} \sum_{x \in C_k} \|x - \mu_k\|^2 \qquad \text{Equation 2}$$

where $\mu_k$ is the mean of points in $C_k$.

According to another example, the clustering method uses the mean-shift algorithm, where K is determined automatically by the algorithm.

The K clusters are advantageously each represented by a cluster center $\boldsymbol{C_k}$ corresponding to the average of all the normalized shapes the cluster $C_k$ contains:

$$\boldsymbol{C_k} \equiv < \overline{X}, \overline{Y} > \equiv \frac{1}{N_k} < \sum_{n=1}^{N_k} X'_n, \sum_{n=1}^{N_k} Y'_n >, \overline{X}, \overline{Y} \in \mathbb{R}^L \qquad \text{Equation 3}$$

A cluster center $\mathbf{C_k}$ is thus represented by two vectors, a first vector $\overline{X}$ comprising the average of the coordinates of all corresponding landmarks in each second image of the plurality of second images $N_k$ comprised in the cluster $C_k$. For example, the first value of the vector $\overline{X}$ is the average of the normalized coordinate x' of all landmarks identified "1" 301 (see figure 3) in the $N_k$ second images of the cluster $C_k$, the second value of the vector $\overline{X}$ is the average of the normalized coordinate x' of all landmarks identified "2" 302 (see figure 3) in the $N_k$ second images of the cluster $C_k$, ..., the last value of the vector $\overline{X}$ is the average of the normalized coordinate x' of all landmarks identified "68" 368 (see figure 3) in the $N_k$ second images of the cluster $C_k$. The second vector $\overline{Y}$ comprises the average of the coordinates of all corresponding landmarks in each second image of the plurality of second images $N_k$ comprised in the cluster $C_k$. For example, the first value of the vector $\overline{Y}$ is the average of the normalized coordinate y' of all landmarks identified "1" 301 (see figure 3) in the $N_k$ second images of the cluster $C_k$, the second value of the vector $\overline{Y}$ is the average of the normalized coordinate y' of all landmarks identified "2" 302 (see figure 3) in the $N_k$ second images of the cluster $C_k$, ..., the last value of the vector $\overline{Y}$ is the average of the normalized coordinate y' of all landmarks identified "68" 368 (see figure 3) in the $N_k$ second images of the cluster $C_k$.

The cluster centers $C=<C_1, C_2, ..., C_k>$ are advantageously stored in a storage device such as a memory or a register to form an expression classifiers representing the K clusters.

In step 103, a first image is generated for each cluster $C_k$. The first image advantageously comprises texture information representative of the texture information associated with each second image of the cluster $C_k$ that the first image is associated with. Texture information corresponds for example to a level of grey for each color of the second images, and for each pixel of the first image, for example a 8 or 10 or 12 bit value for each RGB channel, RGB standing for Red, Green and Blue. More color channels or other color channels may be used to represent the texture information, for example yellow and/or cyan.

According to an advantageous example, the second images are each partitioned in a plurality of elements, each second image being partitioned in a same number of elements. The elements may have any form and are generated according to the landmarks of each second image, wherein several landmarks define the contour of one element. As the landmarks have the same identifiers in all images, i.e. a given identifier refers to the same landmark in each and every second image, a same element has advantageously the same landmarks in each and every second image. An element of a second image encompasses a plurality of pixels of the second image and may be called a superpixel. The form of the element may be defined arbitrarily. According to a variant, an element corresponds to a triangle defined by three vertices a, b and c, each vertex corresponding to a landmark. One of the second images is for example partitioned into a plurality of triangles according to a Delaunay triangulation performed on the landmarks of the second image. This second image is decomposed into a plurality of T landmark-indexed triangles:

$$DT(S') = <T_1, T_2, ..., T_T>, \qquad \text{Equation 4}$$
$$\text{where each } T_t = [<a, b, c> \in [1..L] \wedge a \neq b \neq c]$$

The triangles $T_t$ are determined from one shape S' associated with one second image. The triangles so determined are projected into each second image. The convex hull of each projected triangle $T_t$ comprises a set of pixels in each second image. For each second image of a given cluster, the pixels of each triangle are rasterized, resulting in a set of $N_k$ pixel vectors, each with M coordinates, the result of rasterizing each one of the T triangles in each second image being:

$$P = <P_1, P_2, ... P_{Nk}>, P_n \in \mathbb{R}^M, each\ P_{n=} < rasterize(Image_n, T_1),$$
$$rasterize(Image_n, T_2), ..., rasterize(Image_n, T_T) > \qquad \text{Equation 5}$$

The triangles are advantageously warped to have the same size in all second images and thus ensure that the total number of pixels rasterized for each second image is the same (each $P_n$ has the same size M). From these vectors, dimensionality reduction techniques (e.g. PCA) are applied and only the first Q principal components are kept, with $Q<<N_k$, resulting in a set of Q vectors $P'=<P'_1, P'_2, ..., P'_Q>$. A final texture representative is obtained as the average pixel intensity for each pixel for all Q vectors:

$$\overline{P} = \frac{1}{Q} \sum_{q=1}^{Q} P'_q \qquad \text{Equation 6}$$

The first image representing the cluster is obtained by de-warping $\overline{P}$ according to the triangle positions. The first image corresponds to the collection of texture representations each associated with one triangle. A first image is generated for each cluster in a same way and the K first images associated with the K clusters are advantageously stored in a storage device, such as a memory or a register.

According to an exemplary variant, the dimensionality reduction techniques are not applied and the final texture is obtained directly from the original $N_k$ vectors. The first image representing a given cluster may also be generated globally for example, i.e. without partitioning the second images forming the given cluster. Pixels corresponding to each other in each second image are determined by using the landmarks as a frame of reference and corresponding vectors **P** are obtained. The final texture representation is generated as explained hereinabove by computing the average pixel intensity for each pixel of the vectors, one pixel value being thus obtained for each pixel of the first image. The same process is repeated for each first image representing each one of the K clusters.

**Figure 2** shows the generation of a 3D model of the face of the user represented in the second images 10 of figure 1, according to a particular and non-limiting embodiment of the present principles.

A 3D (three-dimensional) model 21 of the user's face is recovered from a set of 2D (two-dimensional) images 20 of the face of the user taken from multiple viewpoints using a camera, for example an uncalibrated camera. The 2D images represent the face of the user according to different poses and orientations of the face. A 3D model builder 201 is used for building the 3D model 21 of the face of the user from the set of images 20. The 3D model advantageously comprises a mesh having mesh elements (e.g. triangles), each mesh element being defined by its vertices. The 3D model builder implements methods known to those skilled in the art, such as autocalibration or stratification methods. Non limiting examples of such methods are for example described in "Object modelling by registration of multiple range images" written by Y. Chen and G. Medioni and published in Image and vision computing, 10(3):145-155, 1992 or in "A plane-sweep strategy for the 3D reconstruction of buildings from multiple images" written by C. Baillard and A. Zisserman and published in International Archives of Photogrammetry and Remote Sensing, 33(B2; PART 2):56-62, 2000.

The first images comprising texture information are advantageously used as a set of different textures that may be associated with the 3D model. To that aim, a mapping between the 3D mesh vertices of the 3D model and the landmarks is performed. The mapping is done only once as each one of the 68 landmarks has one and the same identifier in each and every shape S' in the different K clusters. Once the mapping has been established, a correspondence between each element (part) of the 3D mesh of the 3D model and the corresponding element of the first images may also be established. If the elements of the first images correspond to triangles, e.g. triangles obtained with the 2D Delaunay triangulation DT(S), the correspondence between the 3D mesh and the triangles is simplified since the elements of the 3D model and the elements of the first images refer to a same geometrical form, i.e. a triangle.

**Figure 4** shows the reconstruction of a part of the face of the user using the 3D model of figure 2 and parts of the first image(s) of figure 1, according to a particular exemplary embodiment of the present principles.

One image 42, called current image 42, of the user wearing a head-mounted display (HMD) is advantageously acquired live by a camera 41 such as a webcam for example. The HMD is tracked 401 to determine its pose parameters (i.e. the 3 degrees of freedom of the HMD's pose (roll, pitch, yaw)). The HMD's pose is tracked in the current image 42, for example by using the information provided by the Internal Motion Unit (IMU) (i.e. a set of sensors comprising accelerometer, gyroscope and magnetometer) of the HMD in combination with external tracking techniques adapted to estimate the head translation and orientation parameters (e.g. an external infrared camera tracking infrared emitters embedded into the HMD). External tracking techniques may rely for example on recognizable patterns placed on the HMD to track the pose (i.e. the orientation) and the position of the HMD. According to a variant, a face landmark estimation algorithm may be applied to track visible face landmarks (e.g. ears, mouth and chin) of the user. The head (or HMD) pose of the current image 42 is estimated by the use of a Landmark-to-head-pose converter 402, which may be implemented under the form of any algorithm known to the skilled person in the art, for example a linear regression algorithm.

Once the HMD (or the face) location and pose have been determined in the current image 42, the 3D model is re-projected onto the current image 42 at that location via a face replacer 403 to obtain the image 43, using the projection matrix associated with the camera 41 used for acquiring the current image 42. The face replacer 403 advantageously comprises a 3D re-projection algorithm and an in-painting algorithm. The camera projection matrix describes a mapping from points in the 3D world (i.e. the space of the user) to 2D image coordinates (2D space of the image). The camera projection matrix may be obtained for example via any chessboard calibration methods. The image 43 corresponds to the image 42 onto which the part of the 3D model which is represented by the expression-specific texture 12 in the image 42 has been in-painted, using the texture information associated with the 3D model, i.e. texture information retrieved from the first image(s). The image 43 may then be displayed.

The texture information used in the in-painting process is advantageously selected among the plurality of first images by comparing the shape of the visible part of the face of the user (e.g. the mouth and/or the chin) with the shape information (i.e. the cluster center) associated with each cluster. The first image that is selected advantageously corresponds to the first image associated with the cluster having the closest cluster center from the shape of the visible part of the face of the user.

Such a process allows replacement of the upper part of the face of a person wearing a HMD (or any device occluding at least partially the face) with the own unanimated face of the person.

Naturally, several current images 42 may be processed in the same way, for example in the case wherein the current image 42 belongs to a video comprising a sequence of current images of the face of the user.

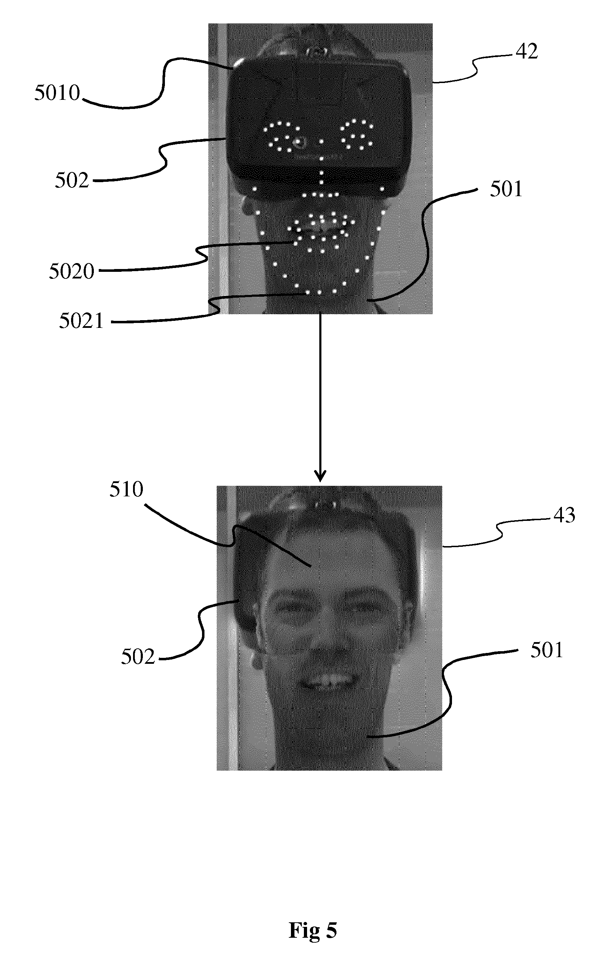

**Figure 5** shows images of the face of the user wearing the HMD before and after face reconstruction, according to a particular exemplary embodiment of the present principles.

The current image 42 represents the face 501 of the user wearing the HMD 502. Visible landmarks 5020, 5021 (for example the mouth 5020 and the chin 5021) of the face are illustrated with white spots on the face. Visible landmarks 5010 located on the HMD are also illustrated with white spots. The pose of the face 501 is for example determined by using the visible landmarks of the face, as described for example in *"Real time head pose estimation with random regression forests"* written by Fanelli et al. and published in Computer Vision and Pattern Recognition, 2011. The pose of the face may also be determined by using the landmarks of the HMD, in combination with information provided by the IMU associated with the HMD. According to a variant, the pose of the face is determined based only on the visible landmarks (of the face and/or of the HMD) or only on the information provided by the IMU.

The image 43 represents the result of the face reconstruction, according to a non-limiting example. The face of the user occluded at least in part on the image 42 is replaced with a part 510 of the 3D model 21 of the face of the user without HMD. The part of the face to be reconstructed is chosen by using the location of the HMD (obtained for example from external tracking techniques using recognizable patterns on the HMD) and the size, i.e. dimensions, of the HMD, i.e. corresponds to the pixels covered by the HMD on the image 42. The location information advantageously comprises the angular pose of the HMD and the position of the HMD, for example the coordinates of its center of gravity. Texture information associated with the selected part 510 of the 3D model is in-painted in place of the texture information of the HMD of the image 42, the in-painting process using the information about the location of the HMD. According to this example, only the part of the face occluded by the HMD on the image 42 is replaced with the corresponding part of selected image. To that aim, the location of the HMD is determined (by video analysis, for example by using a model of the appearance of the HMD computed using a machine learning method or by tracking landmarks located on the HMD, in combination with information provided by the IMU associated with the HMD). The in-painting of the selected part of the 3D model used for replacing the HMD onto the face of the user on image 42 advantageously uses information representative of the dimensions of the HMD (i.e. length, width and depth) to replace only the part of the face occluded by the HMD. Dimensions of the HMD are advantageously transmitted by the HMD to the computing device performing the face reconstruction. According to a variant, the dimensions of the HMD are measured, for example based on video analysis or by tracking landmarks located for example at corners of the HMD. Then based on the information representative of the pose and location of the HMD and based on the information representative of the dimensions of the HMD, a part of the 3D model corresponding to the part of the face occluded by the HMD 502 on image 42 is in-painted onto the face of the user 501, as illustrated on the image 43.

The texture information is selected among the set of first images by using the shape information provided by the visible landmarks 5020, 5021 of the face 501 of the user. The first image that is selected for the in-painting process corresponds to the first image that is associated with the cluster having the closest cluster center to the shape information provided by the visible landmarks 5020, 5021.

According to a variant, the whole face of the user is replaced with texture information of the face of the selected first image in combination with the 3D model.

The result of the in-painting operation may be a patchy image, due to differences in color between the selected first image and the image 42 and inconsistencies at the edges of the in-painted part(s) of the selected image. To correct at least partially these errors and according to an optional variant, a statistical color transfer is advantageously performed to alter the texture color of the selected image (or the selected parts of it) so that it matches that of the final image 43 provided by the current image 42, i.e. the texture color of the part of the face not replaced by the part of the selected first image. This results in:

$$source = \left( \frac{\sigma_{target}}{\sigma_{source}} * (target - \mu_{source}) \right) + \mu_{source} \qquad \text{Equation 7}$$

with 'source' corresponding to the texture color of the in-painted part of the selected image,
'target' corresponding to the texture color of the original face of the image 42,
$\mu$ corresponding to the average and $\sigma$ to the standard deviation of the color information (for example RGB values associated with each pixel).

According to another optional variant, a p-norm feathering composition of the two layers (i.e. a layer corresponding to the current image 42 and a layer corresponding to the selected first image in-painted onto the current image) may be performed to avoid visual inconsistencies at the borders and achieve a clean face replacement.

The texture color of the in-painted part of the selected image is close to the texture color of the part of the face of the current image 42.

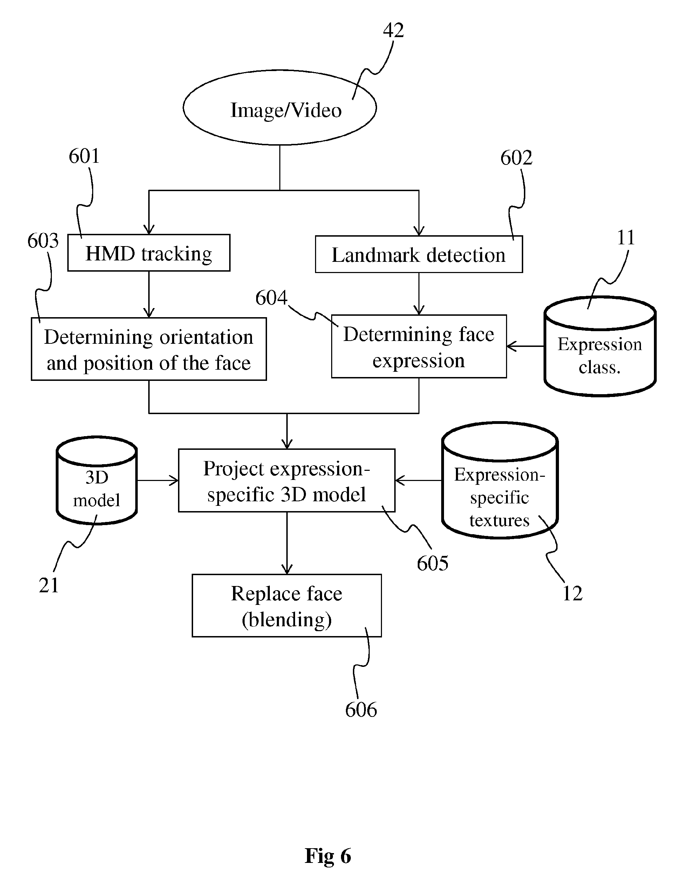

**Figure 6** shows a method of reconstructing at least a part of the face of the current image 42, according to a particular exemplary embodiment of the present principles.

At step 601, the pose of the HMD worn by the user on his/her face is tracked in the current image (which may belongs to a video stream) using the information provided by the Internal Motion Units (accelerometer + gyroscope + magnetometer) in combination with external tracking techniques able to estimate the head position and orientation in 3D, (e.g. placing recognizable patterns outside the HMD and tracking their position, size and orientation, or through an external infrared camera tracking infrared emitters embedded in the HMD).

At step 602, a face landmark estimation algorithm is applied to track visible face landmarks (e.g. ears, mouth and chin) in the current image 42, resulting in a face shape estimate S.

At step 603, once the HMD location and orientation in the 3D world is known, the 3D model of the face is re-projected onto the current image at the determined location of the HMD, using the camera projection matrix of the camera used for acquiring the current image 42. The camera projection matrix describes a mapping from points in the 3D world to 2D image coordinates and is for example obtained via standard chessboard calibration methods.

At step 604, the current image 42 is classified as belonging to the expression-cluster with most similar shape, by comparing the shape of the face in the current image with the shape information associated with each cluster stored in the expression classifier 11. The distance between the shape estimate of the current image 42 (e.g. the shape of the mouth and/or chin that are visible in the current image 42), after normalization (equation 1) S', and each cluster center of the cluster centers $C = < C_1, C_2, ..., C_K >$ (stored in the expression classifier 11). The cluster, which has minimal distance, considered to be the best match is:

$$argmin \ \sum_{k=1}^{K} \|C_K - S'\| \qquad\qquad \text{Equation 8}$$

At step 605, the 3D mesh of the 3D model 21 is filled-in using the first image representing the cluster considered as the best match k and obtained at step 604. The first image is retrieved from the set of first images corresponding to the expression-specific textures 12 stored in a storage device. A first image corresponds to the aggregation of independent local textures, each associated with the pixels covered by one of the elements of the first image (e.g. a triangle). The mapping between these 2D elements and their corresponding 3D mesh region of the 3D model is also used. The independent local texture(s), of the selected first image, associated with the 3D mesh element(s) corresponding to the part of the face covered by the HMD on the current image 42 is (are) applied to the latter 3D mesh elements using well-known texture filling techniques (3D mesh morphology is unaltered).

At step 606, once the 3D expression-specific model, i.e. the 3D model with the texture information retrieved from the selected first image, is correctly aligned on top of the current image 42, in-painting operations are performed to achieve a seamless face replacement. The HMD position information is advantageously used to select which parts of the 3D model are kept and which removed. The result may be a patchy image, due to differences in color between the 3D model and the current image 42 and inconsistencies at the edges.

In order to reduce these errors, a statistical color transfer is optionally performed to alter the 3D model texture color so that it matches that of the current image (target image) (where $\mu$=average and $\sigma$ = standard deviation):

$$source = \left( \frac{\sigma_{target}}{\sigma_{source}} * (target - \mu_{source}) \right) + \mu_{source} \qquad \text{Equation 7}$$

P-norm feathering composition of the two layers may also be optionally performed to avoid discontinuities at the borders of the reconstructed region.

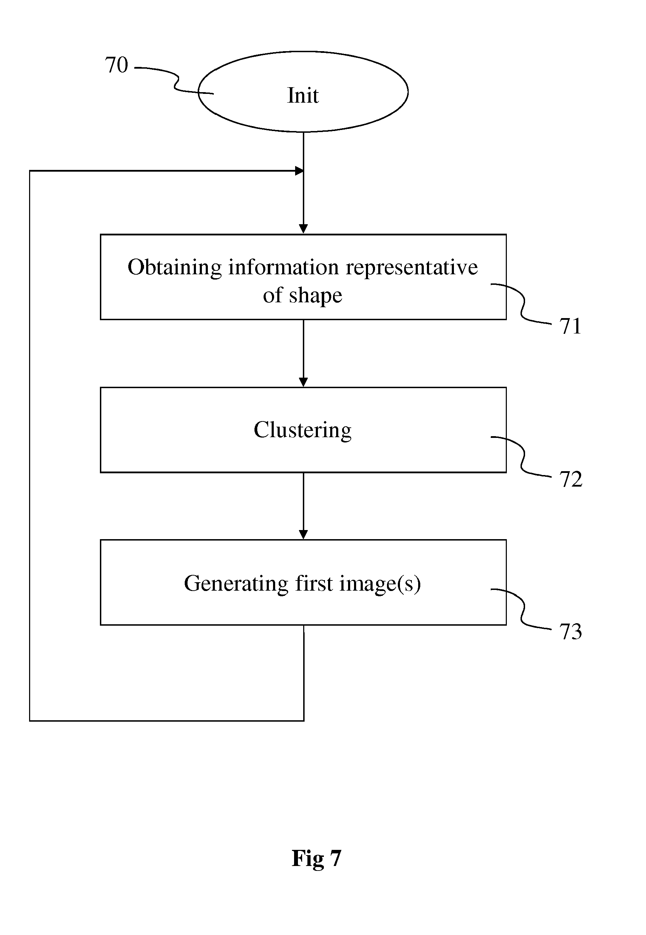

**Figure 7** shows a method of generating the first image(s), according to a particular exemplary embodiment of the present principles.

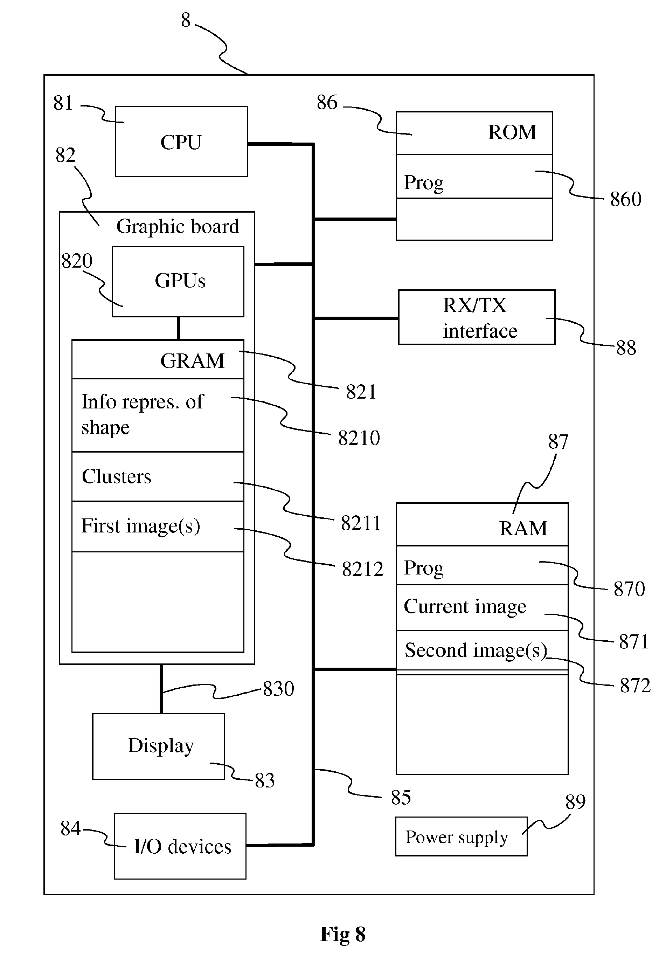

During an initialisation step 70, the different parameters of the device 8 shown on figure 8 are updated. In particular, the information representative of the shape of the face and/or of the HMD are initialised in some way.

Then during step 71, information representative of the shape of the face of a user is obtained for each second image of a set of second images each representing the face, with for example differences between one or more parts of the face from a second image to another one. The shape information corresponds advantageously to a set of landmarks, which are determined by applying a well-known face landmarking method, for example Active Shape Models (ASM), Active Appearance Model (AAM), Deformable Part Models (DPM), Cascaded Pose Regression (CPR), Cascaded Neural Networks (CNN). The obtained landmarks correspond advantageously to determined key-points of the face, which corresponds to the same points of the face in each second image.

Then during a step 72, the second images are clustered in a plurality of clusters. The clusters are obtained by comparing the shape information of the second images with each other to group the second images having close shape information.

Then during a step 73, one first image is generated for each cluster obtained at step 72. The first image associated with one given cluster is representative of the content of the given cluster, i.e. of the texture associated with the shape of the face represented in the second images of the given cluster. The first image is advantageously obtained by using the shape information associated with each second image comprised in the given cluster. The shape information is for example used to partition the second images of the given cluster in a plurality of elements, a texture information (also called independent local texture) being determined for each element, the first image being formed with the set of independent local textures associated with all elements that compose each second image and the first image. According to another example, the shape information is used to locate the pixels of each second image with regard to the landmarks, this location information being then used to retrieve a pixel value for the pixel of the first images from corresponding pixels in all second images. Corresponding pixels are pixels which are located at a same location with regard to the landmarks in all second images and in the first image.

When the current image belongs to a video, steps 71, 72 and 73 may be reiterated for any image of the video.

**Figure 8** diagrammatically shows a hardware embodiment of a device 8 configured for generating first image(s) and/or for reconstructing at least a part of an object, e.g. the face of a user wearing a HMD. The device 8 is also configured for the creation of display signals of one or several images, the content of which integrates added part(s) of the object and/or original part(s) of the object acquired with any acquisition device such as a camera, for example a webcam. The device 8 corresponds for example to a tablet, a Smartphone, a games console, a laptop or a set-top box.

The device 8 comprises the following elements, connected to each other by an address bus 85 of addresses that transports data that also transports a clock signal:

- a microprocessor 81 (or CPU),
- a graphics card 82 comprising:

  • several Graphical Processor Units (or GPUs) 820,
  • a Graphical Random Access Memory (GRAM) 821,

- a non-volatile memory of ROM (Read Only Memory) type 86,
- a Random Access Memory or RAM 87,
- a receiver/transmitter interface 88,
- one or several I/O (Input/Output) devices 84 such as for example a tactile interface, a mouse, a webcam, etc. and
- a power source 89.

The device 8 also comprises one or more display devices 83 of display screen type directly connected to the graphics card 82 to display images calculated live in the graphics card, for example. The use of a dedicated bus to connect the display device 83 to the graphics card 82 offers the advantage of having much greater data transmission bitrates and thus reducing the latency time for the displaying of images composed by the graphics card. According to a variant, a display device is external to the device 8 and is connected to the device 8 by a cable or wirelessly for transmitting the display signals. The device 8, for example the graphics card 82, comprises an interface for transmission or connection (not shown in figure 8) adapted to transmit a display signal to an external display means such as for example an LCD or plasma screen or a video-projector.

It is noted that the word "register" used in the description of memories 821, 86, and 87 designates in each of the memories mentioned, both a memory zone of low capacity (some binary data) as well as a memory zone of large capacity (enabling a whole program to be stored or all or part of the data representative of data calculated or to be displayed).

When switched-on, the microprocessor 81 loads and executes the instructions of the program contained in the RAM 87.

The random access memory 87 notably comprises:

- in a register 870, the operating program of the microprocessor 81 responsible for switching on the device 8,
- data 871 representative of the current image 42 (for example RGB data),
- data 872 representative of the second images (for example RGB data).

The algorithms implementing the steps of the method(s) specific to the present principles and described hereinbefore are stored in the memory GRAM 821 of the graphics card 82 associated with the device 8 implementing these steps. When switched on and once the data 871 and 873 are loaded into the RAM 87, the graphic processors 820 of the graphics card 82 load these data into the GRAM 821 and execute the instructions of these algorithms in the form of microprograms of "shader" type using HLSL (High Level Shader Language) language or GLSL (OpenGL Shading Language) for example.

The random access memory GRAM 821 notably comprises:

- in a register 8210, information representative of the shape S and/or S' of the face represented in the second images,
- in a register 8211, information representative of the clusters, for example the cluster center for each cluster,
- in a register 8212, data representative of the first image(s) (for example RGB data).

According to another variant, a part of the RAM 87 is assigned by the CPU 81 for storage of the identifiers and the distances if the memory storage space available in GRAM 821 is insufficient. This variant however causes greater latency time in the composition of an image comprising a representation of the environment composed from microprograms contained in the GPUs as the data must be transmitted from the graphics card to the random access memory 87 passing by the bus 85 for which the transmission capacities are generally inferior to those available in the graphics card for transmission of data from the GPUs to the GRAM and vice-versa.

According to another variant, the device 8 does not comprise any Graphic board 82, every computation being performed in the CPU 81 using the RAM 87.

According to another variant, the device 8 comprises only one storage device as a memory.

According to another variant, the power supply 88 is external to the device 8.

Naturally, the present disclosure is not limited to the embodiments previously described.

In particular, the present disclosure is not limited to a method of displaying a video content but also extends to any device implementing this method and notably any devices comprising at least one GPU. The implementation of calculations necessary to select the part(s) of the first image to be painted into the current image of the object is not limited either to an implementation in shader type microprograms but also extends to an implementation in any program type, for example programs that can be executed by a CPU type microprocessor. The use of the methods of the present disclosure is not limited to a live utilisation but also extends to any other utilisation, for example for processing known as postproduction processing in a recording studio.

The implementations described herein may be implemented in, for example, a method or a process, an apparatus, a software program, a data stream, or a signal. Even if only discussed in the context of a single form of implementation (for example, discussed only as a method or a device), the implementation of features discussed may also be implemented in other forms (for example a program). An apparatus may be implemented in, for example, appropriate hardware, software, and firmware. The methods may be implemented in, for example, an apparatus such as, for example, a processor, which refers to processing devices in general, including, for example, a computer, a microprocessor, an integrated circuit, or a programmable logic device. Processors also include communication devices, such as, for example, Smartphones, tablets, computers, mobile phones, portable/personal digital assistants ("PDAs"), and other devices that facilitate communication of information between end-users.

Implementations of the various processes and features described herein may be embodied in a variety of different equipment or applications, particularly, for example, equipment or applications associated with data encoding, data decoding, view generation, texture processing, and other processing of images and related texture information and/or depth information. Examples of such equipment include an encoder, a decoder, a post-processor processing output from a decoder, a pre-processor providing input to an encoder, a video coder, a video decoder, a video codec, a web server, a set-top box, a laptop, a personal computer, a cell phone, a PDA, and other communication devices. As should be clear, the equipment may be mobile and even installed in a mobile vehicle.

Additionally, the methods may be implemented by instructions being performed by a processor, and such instructions (and/or data values produced by an implementation) may be stored on a processor-readable medium such as, for example, an integrated circuit, a software carrier or other storage device such as, for example, a hard disk, a compact diskette ("CD"), an optical disc (such as, for example, a DVD, often referred to as a digital versatile disc or a digital video disc), a random access memory ("RAM"), or a read-only memory ("ROM"). The instructions may form an application program tangibly embodied on a processor-readable medium. Instructions may be, for example, in hardware, firmware, software, or a combination. Instructions may be found in, for example, an operating system, a separate application, or a combination of the two. A processor may be characterized, therefore, as, for example, both a device configured to carry out a process and a device that includes a processor-readable medium (such as a storage device) having instructions for carrying out a process. Further, a processor-readable medium may store, in addition to or in lieu of instructions, data values produced by an implementation.

As will be evident to one of skill in the art, implementations may produce a variety of signals formatted to carry information that may be, for example, stored or transmitted. The information may include, for example, instructions for performing a method, or data produced by one of the described implementations. For example, a signal may be formatted to carry as data the rules for writing or reading the syntax of a described embodiment, or to carry as data the actual syntax-values written by a described embodiment. Such a signal may be formatted, for example, as an electromagnetic wave (for example, using a radio frequency portion of spectrum) or as a baseband signal. The formatting may include, for example, encoding a data stream and modulating a carrier with the encoded data stream. The information that the signal carries may be, for example, analog or digital information. The signal may be transmitted over a variety of different wired or wireless links, as is known. The signal may be stored on a processor-readable medium.

A number of implementations have been described. Nevertheless, it will be understood that various modifications may be made. For example, elements of different implementations may be combined, supplemented, modified, or removed to produce other implementations. Additionally, one of ordinary skill will understand that other structures and processes may be substituted for those disclosed and the resulting implementations will perform at least substantially the same function(s), in at least substantially the same way(s), to achieve at least substantially the same result(s) as the implementations disclosed. Accordingly, these and other implementations are contemplated by this application.

**Claims**

1. A method of generating a first image, the method comprising:

   - for each second image of a set (10) of second images representative of an object, obtaining (71) an information representative of a shape (30) of said object;
   - clustering (72) said second images into a plurality of clusters according to said information (30);
   - for each cluster of said plurality of clusters, generating (73) said first image using said information (30) associated with each second image of said cluster, said first image being representative of said cluster.

2. The method according to claim 1, wherein said generating (73) comprises, for each cluster of said plurality of clusters:

   - partitioning each second image of said cluster into a plurality of parts according to said information;
   - generating for each part of said plurality of parts a texture information;
   - generating said first image from the texture information of each part.

3. The method according to one of claims 1 to 2, further comprising obtaining for each cluster of said plurality of clusters an information representative of a cluster center.

4. The method according to one of claims 1 to 3, wherein said information representative of a shape (30) of said object in a second image is obtained from landmarks (301, 302, 368) associated with said object of said second image.

5. The method according to claim 3, further comprising, for at least a current image (42) comprising a representation of said object:

   - obtaining an information representative of a shape of said object in the at least a current image;
   - selecting a cluster among the plurality of clusters by comparing said information representative of a shape of said object in the at least a current image with said information representative of cluster center
   - replacing at least a part of said object of said at least a current image with a corresponding at least a part of said object represented in the first image representative of the selected cluster.

6. The method according to claim 5, further comprising associated said first image with a 3D model (21) of said object, the replacing using said 3D model (21).

7. The method according to claim 5 or 6, wherein said object is a face (501) wearing a head mounted display (502), the at least a replaced part of said object corresponding to a part of the face (501) occluded by the head mounted display (502), the at least a replaced part being determined from information representative of dimensions of the head mounted display (502) and from information representative of a location of the head mounted display (502) obtained from at least one inertial sensor of the head mounted display (502).

8. A device (8) for generating a first image, the device comprising at least one processor (820) configured to:

   - obtain, for each second image of a set of second images representative of an object, an information representative of a shape of said object;
   - cluster said second images into a plurality of clusters according to said information;
   - generate, for each cluster of said plurality of clusters, said first image using said information associated with each second image of said cluster, said first image being representative of said cluster.

9. The device according to claim 8, wherein the at least one processor (820) is further configured to:

- partition each second image of said cluster into a plurality of parts according to said information;
- generate for each part of said plurality of parts a texture information;
- generate said first image from the texture information of each part.

10. The device according to one of claims 8 to 9, wherein the at least one processor (820)is further configured to obtain, for each cluster of said plurality of clusters, an information representative of a cluster center.

11. The device according to one of claims 8 to 10, wherein said information representative of a shape of said object in a second image is obtained from landmarks associated with said object of said second image.

12. The device according to claim 10, wherein the at least one processor (820) is further configured to, for at least a current image comprising a representation of said object:

- obtain an information representative of a shape of said object in the at least a current image;
- select a cluster among the plurality of clusters by comparing said information representative of a shape of said object in the at least a current image with said information representative of cluster center
- replace at least a part of said object of said at least a current image with a corresponding at least a part of said object represented in the first image representative of the selected cluster.

13. The device according to claim 12, wherein the at least one processor (820) is further configured to associate said first image with a 3D model of said object, the replacing using said 3D model.

14. The device according to claim 12 or 13, wherein said object is a face of a user wearing a head mounted display, the at least a replaced part of said object corresponding to a part of the face occluded by the head mounted display, the at least a replaced part being determined from information representative of dimensions of the head mounted display and from information representative of a location of the head mounted display obtained from at least one inertial sensor of the head mounted display.

15. A computer program product comprising instructions of program code for executing steps of the method according to one of claims 1 to 7, when said program is executed on a computer.

10

101

102

103

Landmark detection

Train Expression classifier

Recover texture

Expression class.

11

Expression -specific textures

12

**Fig 1**

20

201

21

3D model builder

3D model

**Fig 2**

**Fig 3**

**Fig 4**

**Fig 5**

42

Image/Video

601

603

HMD tracking

602

Landmark detection

11

Expression class.

604

Determining orientation and position of the face

Determining face expression

3D model

Project expression-specific 3D model

Expression-specific textures

21

605

12

Replace face (blending)

606

**Fig 6**

70

Init

Obtaining information representative
of shape

71

Clustering

72

Generating first image(s)

73

**Fig 7**

**Fig 8**

Europäisches
Patentamt

European
Patent Office

Office européen
des brevets

## EUROPEAN SEARCH REPORT

Application Number

EP 15 30 5834

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | László Jeni ET AL: "Dense3DFaceAlignmentfrom2DVideosinReal-Time", <br><br> 1 May 2015 (2015-05-01), XP055225586, Retrieved from the Internet: URL:http://www.researchgate.net/profile/Laszlo_Jeni/publication/272202661_Dense_3D_Face_Alignment_from_2D_Videos_in_Real-Time/links/54df88780cf2953c22b3cb73.pdf [retrieved on 2015-11-03] | 1-4, 8-11,15 | INV. G06K9/00 |
| Y | * sections I-III, IV.D * <br> * figures 1-4,10 * | 5-7, 12-14 | |
| Y | GHIASI GOLNAZ ET AL: "Occlusion Coherence: Localizing Occluded Faces with a Hierarchical Deformable Part Model", 2014 IEEE CONFERENCE ON COMPUTER VISION AND PATTERN RECOGNITION, IEEE, 23 June 2014 (2014-06-23), pages 1899-1906, XP032649503, DOI: 10.1109/CVPR.2014.306 [retrieved on 2014-09-24] | 5-7, 12-14 | |
| A | * sections 1-5 * | 1-4, 8-11,15 | TECHNICAL FIELDS SEARCHED (IPC) <br><br> G06K |

-/--

The present search report has been drawn up for all claims

| Place of search | Date of completion of the search | Examiner |
|---|---|---|
| The Hague | 11 November 2015 | Nilsson, Martin |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

Europäisches
Patentamt

European
Patent Office

Office européen
des brevets

## EUROPEAN SEARCH REPORT

Application Number

EP 15 30 5834

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | SONG MINGLI ET AL: "Robust 3D Face Landmark Localization Based on Local Coordinate Coding", IEEE TRANSACTIONS ON IMAGE PROCESSING, IEEE SERVICE CENTER, PISCATAWAY, NJ, US, vol. 23, no. 12, 1 December 2014 (2014-12-01), pages 5108-5122, XP011562534, ISSN: 1057-7149, DOI: 10.1109/TIP.2014.2361204 [retrieved on 2014-10-21] * sections I-IV * * figures 1-12 * | 1,8,15 | |
| A | BURGOS-ARTIZZU XAVIER P ET AL: "Robust Face Landmark Estimation under Occlusion", 2013 IEEE INTERNATIONAL CONFERENCE ON COMPUTER VISION, IEEE, 1 December 2013 (2013-12-01), pages 1513-1520, XP032572911, ISSN: 1550-5499, DOI: 10.1109/ICCV.2013.191 [retrieved on 2014-02-28] * section 1, 3-5 * * figures 1-3,5,9 * | 1-15 | TECHNICAL FIELDS SEARCHED (IPC) |

The present search report has been drawn up for all claims

| Place of search | Date of completion of the search | Examiner |
|---|---|---|
| The Hague | 11 November 2015 | Nilsson, Martin |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **T. COOTES ; C.J. TAYLOR.** Active shape models. *Proceedings of the British Machine Vision Conference,* 1992
- **T. COOTES ; G. EDWARDS ; C. TAYLOR.** Active appearance models. *Transactions in Pattern Analysis and Machine Intelligence,* 2001, vol. 23 (6), 681-685
- **P. FELZENSZWALB ; R. GIRSHICK ; D. MCALLESTER ; D. RAMANAN.** Object detection with discriminatively trained part based models. *Transactions in Pattern Analysis and Machine Intelligence,* 2010, vol. 32 (9), 1627-1645
- **X.P. BURGOS-ARTIZZU ; P. PERONA ; P. DOLLAR.** Robust face landmark estimation under occlusion. *proceedings of the International Conference in Computer Vision,* 2013

- **J. ZHANG ; S. SHAN ; M. KAN ; X. CHEN.** Coarse-to-fine auto-encoder networks for real-time face alignment. *proceedings of the European Conference in Computer Vision,* 2014
- **Y. CHEN ; G. MEDIONI.** Object modelling by registration of multiple range images. *Image and vision computing,* 1992, vol. 10 (3), 145-155
- **C. BAILLARD ; A. ZISSERMAN.** A plane-sweep strategy for the 3D reconstruction of buildings from multiple images. *International Archives of Photogrammetry and Remote Sensing,* 2000, vol. 33, 56-62
- **FANELLI et al.** Real time head pose estimation with random regression forests. *Computer Vision and Pattern Recognition,* 2011